# EUROPEAN PATENT APPLICATION

(11) **EP 4 349 792 A1**
(43) Date of publication of application: **10.04.2024**
(21) Application number: 22200161.2
(22) Date of filing: 06.10.2022
(51) Int. Cl.: C02F 1/461, H01M 8/1018, H01M 14/00, H01M 16/00, C25B 1/55, C25B 5/00, C02F 103/08

(54) **DEVICE FOR THE CAPTURE OF CARBON DIOXIDE**

(71) Applicant: TOYOTA JIDOSHA KABUSHIKI KAISHA, Aichi-Ken 471-8571 (JP)
(72) Inventor: JOHNSON, Hannah, 1140 BRUSSELS (BE); KINGE, Sachin, 1140 BRUSSELS (BE); TSAMPAS, Michail, 5673 BR NUENEN (NL); ZAFEIROPOULOS, Georgios, 5614 GG EINDHOVEN (NL); VAN DE SANDEN, Mauritius C.M., 5017 JH TILBURG (NL); GHOSH, Sreetama, 5612 AH EINDHOVEN (NL); PEETERS, Toon A.A.M., 5445 LANDHORST (NL)
(74) Representative: Cabinet Beau de Loménie

(57) **Abstract**

The invention relates to a carbon dioxide capture device comprising a first reactor which comprises an anion exchange membrane placed between an anode and a cathode. On the cathode side of the first reactor there is a fluid inlet able to carry at least one gas and/or one liquid comprising carbonated water, such as seawater, and on the anode side of the first reactor there is a fluid inlet able to carry at least one gas and/or water. By applying current, an oxygen evolution reaction and/or a carbon dioxide evolution occur at the anode, an oxygen reduction reaction and/or a carbon dioxide reduction reaction occur at the cathode, and the anion exchange membrane carries hydrogen carbonate and/or carbonate ions from cathode to anode, and generates carbon dioxide at the anode. The invention also concerns the use of a carbon dioxide capture device according to the invention for the treatment of a liquid comprising water, bicarbonate ions, carbonate ions and sodium chloride, such as seawater, preferably for removing carbon dioxide from such a liquid. Finally, the invention relates to a method for treating a liquid comprising water, bicarbonate ions, carbonate ions and sodium chloride, such as seawater, comprising the step of introducing such a liquid comprising water, bicarbonate ions, carbonate ions and sodium chloride, into the carbon dioxide capture device of the invention, preferably via the fluid inlet of the cathode of the first reactor of the carbon dioxide capture device of the invention

## Description

### BACKGROUND OF THE INVENTION

### 1. Field of the Invention

The invention relates to a carbon dioxide capture device comprising a first reactor which comprises an anion exchange membrane placed between an anode and a cathode. On the cathode side of the first reactor there is a fluid inlet able to carry at least one gas and/or one liquid comprising water (H₂O), bicarbonate ions such as sodium bicarbonate (NaHCO₃), carbonate ions such as sodium carbonate (Na₂CO₃) and sodium chloride (NaCl), such as seawater containing dissolved carbon dioxide in the form of bicarbonate ions (such as sodium bicarbonate) and carbonate ions (such as sodium carbonate), and on the anode side of the first reactor there is a fluid inlet able to carry at least one gas and/or water. By applying current, and preferably photocurrent, generated by the anode, cathode, or both at once, an oxygen evolution reaction and/or a carbon dioxide evolution reaction occur at the anode, an oxygen reduction reaction and/or a carbon dioxide reduction reaction occur at the cathode, and the anion exchange membrane carries hydrogen carbonate and/or carbonate ions from cathode to anode, and generates carbon dioxide at the anode and possibly dihydrogen at the cathode. The invention also concerns the use of a carbon dioxide capture device according to the invention for the treatment of carbonated water emitted by factories, vehicles or energy plants, or of liquids comprising water, bicarbonate ions, carbonate ions, and sodium chloride, and preferably seawater. Finally, the invention relates to a method for treating a liquid comprising water, bicarbonate ions, carbonate ions and sodium chloride, and preferably seawater, comprising the step of introducing said liquid, into the carbon dioxide capture device of the invention.

In preferred embodiments of the present invention, the fluid involved in fluid inlet flow is liquid, i.e. seawater containing dissolved carbon dioxide in the form of bicarbonate ions (such as sodium bicarbonate) and carbonate ions (such as sodium carbonate).

### 2. Description of Related Art

Anthropogenic carbon dioxide emissions are causing a global environmental crisis, exemplified by increased propensity for natural disasters (such as flooding and droughts), massive ice melt causing a rise in average sea level and mass extinction of animals and plants which cannot evolve quickly enough to survive the new climatic conditions.

Carbon dioxide levels are hoped to decline in the coming years with the introduction of renewable power sources and improved energy efficiency. However, this alone is insufficient to tackle the climate crisis. Indeed a recent report from the International Panel on Climate Change has shown that carbon capture and storage - the capture of emitted carbon dioxide and its long-term storage, for example underground - will play an important role in limiting the extent of global warming. Specifically, it would be necessary to capture and store 14% of carbon dioxide emissions by 2050 in the 2°C scenario and 32 % in the below 2°C scenario.

Whilst solutions to capture concentrated carbon dioxide are well-known and already commercialized on a medium scale, less is being done to tackle carbon dioxide emitted from unavoidable and non-concentrated sources, such as transport (currently), in-built carbon dioxide emissions in manufacturing, which may need to be offset, and agriculture. The ocean acts as a natural carbon sink - absorbing the carbon dioxide (CO₂) from the air. However, the absorption of excess of CO₂ from anthropogenic activities into the ocean is causing ocean acidification, due to a consumption of carbonate ions which react with CO₂ and water to form bicarbonate, with a pH decrease of approximately 0.1 (or 30% increase in acidity) (Ocean acidification, National Oceanic and Atmospheric Administration (noaa.gov)). This is resulting in a loss of biodiversity, especially for species like corals and shellfish, which rely on carbonate ions to make their shells. It's notable that the concentration of CO₂ in the form of ions in seawater is around 140 times higher than in ambient air (L. Yan et al., An Electrochemical Hydrogen-Looping System for Low-Cost CO₂ Capture from Seawater, *ACS Energy Lett.* 2022, 7, 6, 1947-1952). The higher concentration can also increase the reaction rate compared to direct air capture methods. Therefore, removing CO₂ from the ocean has the effect of restoring the pH balance in the ocean and in the longer term, of restoring biodiversity.

One of the existing concepts for electrochemical CO₂ capture from seawater is based on a traditional electrodialysis cell. In this cell, proton and OH⁻constituents, existing in the aqueous electrolyte, react by water splitting with the assistance of hydrogen oxidation and evolution (HOR/HER) at two separated electrodes, in a processed referred as an electrochemical hydrogen-looping flow cell (L. Yan et al., An Electrochemical Hydrogen-Looping System for Low-Cost CO2 Capture from Seawater, ACS Energy Lett. 2022, 7, 6, 1947-1952). The second approach uses bipolar membrane electrodialysis using an electrochemical pH-swing concept, to enable the *in situ* carbonate mineralization via the alkalinization route (R. Sharifian, et al., Oceanic carbon capture through electrochemically induced in situ carbonate mineralization using bipolar membrane, Chemical Engineering Journal, Vol. 438, 2022, 135326). Prior electrochemical inventions, as described here, have focused on purely electrochemical reactions (i.e. not powered directly by light), and thus must be connected to a power supply in order to operate.

Photoelectrochemical carbon dioxide capture is disclosed in US 8 791 354 B2, however in this case, the CO₂ is absorbed from the ambient air. A redox mediator is used to transfer the carbon dioxide from one side of the device to the other through a liquid electrolyte (nonaqueous solvent or an ionic liquid, which adds complications to the device). Rather than taking the electricity to transfer the carbon dioxide from an external source, light is used to generate charge within a semiconductor (although an external source could also be used, in the night for example). This charge can then be used to push the carbon dioxide through the device. Additionally this device can be used as a photovoltaic cell when the carbon dioxide suppression is by-passed.

Other existing methods to capture CO₂ from seawater involve mineralization methods, such as adding CaO to seawater to allow reaction to CaCO₃ (Li, Hongwei & Tang, et al., 2018, Study of CO2 capture by seawater and its reinforcement. Energy. Elsevier, vol. 164(C), pages 1135-1144), and filtering methods using selective membranes operating with pressurized seawater (US 8 313 557 B2).

As regards carbon dioxide capture devices, the current solutions are i. energy intensive, ii. high cost and iii. provide little financial incentive for installation (beyond avoiding future carbon taxes, the future cost of which is still undecided). It is desirable to offer generation of electricity in parallel to the carbon dioxide capture, incentivizing the concept compared with the electrochemical, membrane matrix and amine cycling approaches. It is preferable to propose a free-standing device - simplifying installation and operation, and avoid the use of exotic chemical species such as redox mediators which are expensive and difficult to scale.

### SUMMARY OF THE INVENTION

The invention described herein is a device for solar-driven carbon dioxide capture and separation from gas and/or liquid comprising carbonated water such as seawater. It utilises an anion exchange membrane to selectively trap carbon dioxide containing ions (hydrogen carbonate, bicarbonate) in a first reactor of the device which is transferred, preferably using a bias free current, to a storage area on the other side of the first reactor of the device. A second reactor of the device may then convert the oxygen to water through a proton exchange membrane for facile separation from carbon dioxide. In addition, electrical power is also provided by the device in parallel with carbon dioxide capture. It can be thought of as a photovoltaic with carbon dioxide capture functionality.

The present invention thus describes a device for the capture and concentration of carbon dioxide through oxidation and reduction cycles via an anion exchange membrane, possibly along with the evolution of hydrogen. The concentrated carbon dioxide gas stream may then enter a second reactor which acts a carbon dioxide purifier by removing unwanted oxygen.

In this context, the present invention thus provides a carbon dioxide capture device comprising:
a first reactor comprising an anion exchange membrane placed between an anode and a cathode, and preferably between a porous (photo)anode and a porous (photo)cathode, wherein the cathode of the first reactor has at least a fluid inlet able to carry at least one gas and/or at least one liquid comprising carbonated water, and in particular at least one liquid comprising water (H₂O), bicarbonate ions such as sodium bicarbonate (NaHCO₃), carbonate ions such as sodium carbonate (Na₂CO₃) and sodium chloride (NaCI), such as seawater, and the anode of the first reactor has at least a fluid inlet able to carry at least one gas and/or water (H₂O), and preferably water (H₂O), and
wherein, by applying current, and preferably photocurrent, generated by the anode and/or the cathode, an oxygen evolution reaction and/or a carbon dioxide evolution reaction occur at the anode, an oxygen reduction reaction and/or a carbon dioxide reduction reaction occur at the cathode, and the anion exchange membrane carries bicarbonate (HCO₃⁻) and/or carbonate (CO₃²⁻) ions from cathode to anode, and generates carbon dioxide (CO₂) and oxygen (O₂) at the anode and water (H₂O) at the cathode.

When a photoanode and a photocathode are used and the voltage generated from the photoelectrodes is sufficient for water splitting (> 1.23V), dihydrogen (H₂) may also be generated from H⁺ from HCO₃⁻ at the cathode. Alternatively a bias (external voltage) may be applied to initiate dihydrogen (H₂) production.

In addition, the present invention concerns the use of a carbon dioxide capture device according to the invention for the treatment of carbonated water emitted by factories, vehicles or energy plants, preferably for removing carbon dioxide from said carbonated water. The present invention also concerns the use of a carbon dioxide capture device according to the invention for the treatment of a liquid comprising water (H₂O), bicarbonate ions such as sodium bicarbonate (NaHCO₃), carbonate ions such as sodium carbonate (Na₂CO₃) and sodium chloride (NaCl), preferably for removing carbon dioxide from such a liquid. In a preferred embodiment, the present invention concerns the use of a carbon dioxide capture device according to the invention for the treatment of seawater.

Finally, the invention relates to a method for treating a liquid comprising water, bicarbonate ions (such as sodium bicarbonate), carbonate ions (such as sodium carbonate) and sodium chloride, and in particular seawater, comprising the step of introducing the liquid comprising water (H₂O), bicarbonate ions (such as sodium bicarbonate (NaHCO₃)), carbonate ions (such as sodium carbonate (Na₂CO₃)) and sodium chloride (NaCl), into the carbon dioxide capture device of the invention, preferably via the fluid inlet of the cathode of the first reactor of the carbon dioxide capture device of the invention.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
Figure 1 (Fig. 1) shows a schematic diagram of carbon dioxide (CO₂) concentration by the first reactor of the carbon dioxide capture device of the present invention;
Figure 2 (Fig. 2) shows the band-gap of various semiconductors with potential for oxygen evolution and reduction indicated with dotted, long lines, based on the reference Nanoscale Horiz., 2016, 1, 243-267;
Figure 3 (Fig. 3) shows a schematic diagram of carbon dioxide (CO₂) separation by the second reactor of the carbon dioxide capture dioxide capture device of the present invention;
Figure 4 (Fig. 4) shows combined device configurations wherein capture and separation functions are combined into one device, shown here in two exemplary configurations as Fig. 4a and Fig. 4b;

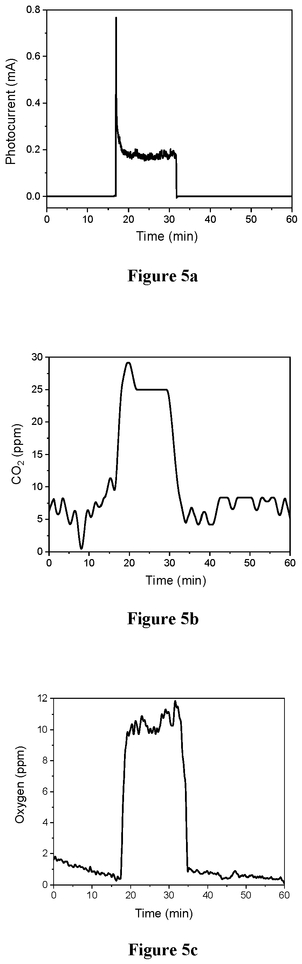

Figure 5a (Fig. 5a) is a graph showing the photocurrent generated in the first reactor under irradiation, Figure 5b (Fig. 5b) is a graph showing the CO₂ generated in the first reactor under irradiation, and Figure 5c (Fig. 5c) is a graph showing the O₂ generated in the first reactor under irradiation;
Figure 6 (Fig. 6) shows experimental data of CO₂ separation in the second reactor 2 according to the invention, the part of the device concerned being shown in Figure 6a (Fig. 6a) and the results in Figure 6b (Fig. 6b); and

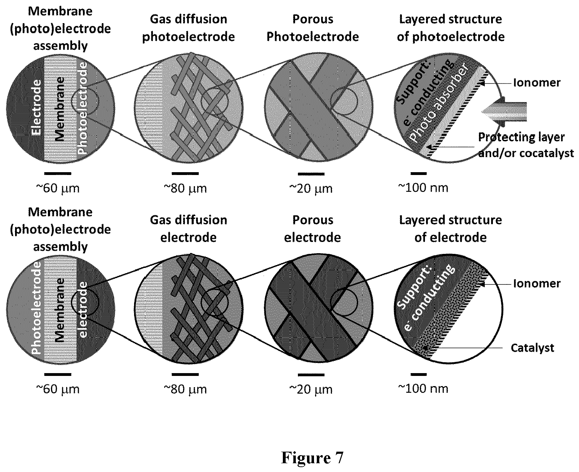

Figure 7 (Fig. 7) shows possible device structure elements that can be used within the present invention.

### DETAILED DESCRIPTION OF EMBODIMENTS

The present invention relates to a carbon dioxide capture device that comprises at least one membrane reactor, and preferably two membrane reactors connected with each other. The reactors can be placed in various configurations, for example but not restricted to, side-by-side or one on top of the other, if the first reactor is sufficiently transparent.

Among advantages one or more of which may be observed with respect to known carbon dioxide capture devices, the present invention may be seen as providing:
1) an easy-to-implement, stand-alone device; and/or
2) a new method for separation of O₂ and CO₂ by converting O₂ to H₂O (gas to liquid).

The present invention provides a new mechanism to transfer the CO₂ from the sorbent to the collector via continuous oxygen reduction / oxidation cycles and carbon dioxide reduction / oxidation cycles. (Photo)electrochemical CO₂ sorption and collection via redox cycling has been so far restricted to redox cycles involving ionic liquids and redox mediators, which are generally expensive or exotic materials. The present invention provides a mechanism for a simple, device design which captures carbon dioxide and produces electricity and/or hydrogen simultaneously - incentivizing its use. Additionally, a photoelectrochemical method to separate O₂ / CO₂ by converting the O₂ to H₂O is proposed. The present invention envisages:
i. The use of oxygen reduction and oxygen evolution reaction and carbon dioxide reduction and carbon dioxide evolution cycles to create a bias free current as a way to drive HCO₃⁻ ions through the anion exchange membrane.
ii. The use of oxygen reduction reaction and oxygen evolution reaction cycles and carbon dioxide reduction and carbon dioxide evolution cycles to push H⁺ ions through the proton exchange membrane.
iii. The use of solar energy to power the reaction with parallel production of electricity in the same device (but the invention could also be powered or supported by an external power source).

The function of the first reactor is to remove the CO₂ - for example this can be to remove the CO₂ present in the form of bicarbonate ions or carbonate ions in gas and/or liquids comprising water, bicarbonate ions, carbonate ions and sodium chloride, such as seawater or water reservoirs (e.g. natural or artificial lakes) or alternatively from a concentrated solution such as KHCO₃. In effect, efforts to capture CO₂ in liquid solutions, e.g. via the conversion of potassium hydroxide into potassium bicarbonate, may be combined with the device of the present invention in order to subtract CO₂ from KHCO₃ and concentrate in particular at the side of the fluid outlet of the (photo)anode of the first reactor (117).

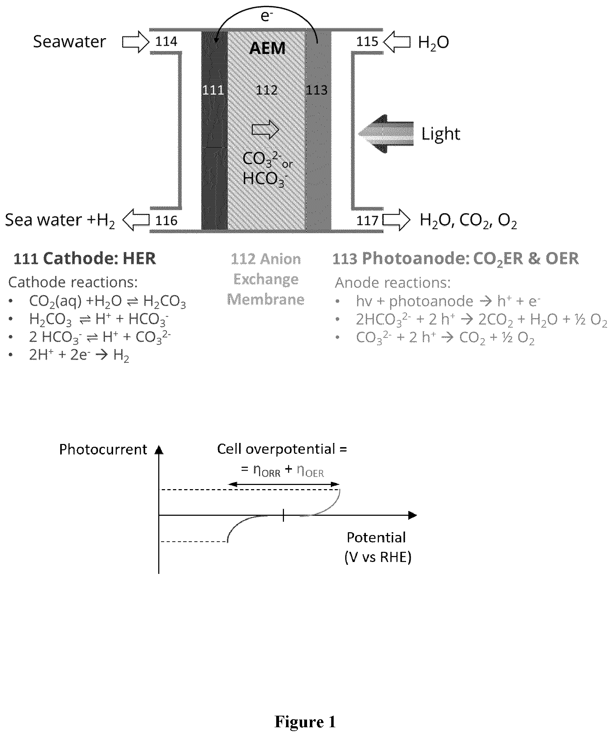

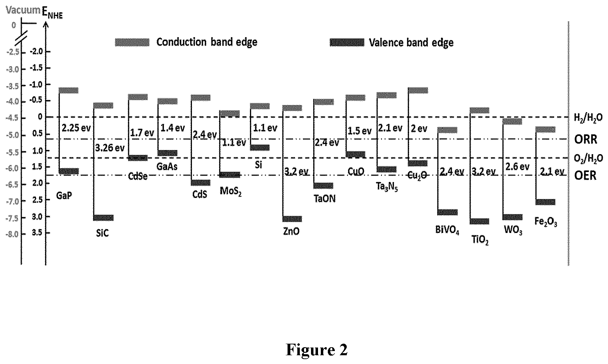

The first reactor comprises an anion exchange membrane placed between an anode and a cathode, and preferably between a porous (photo)anode and porous (photo)cathode. The anode of the first reactor may contain or may be connected physically or electrically to oxygen evolution and/or carbon dioxide evolution catalyst(s), whilst the cathode may contain or may be connected to a hydrogen evolution catalyst and/or an oxygen reduction catalyst. This may create a bias free current, where a photocurrent is generated only by light irradiation and applied potential bias is not needed. In order to generate a photocurrent efficiently from a photoelectrode, both solar light as well as an applied potential bias may be required across the photoelectrode. The main function of this is to improve charge separation between e⁻ and h⁺. However, applying a potential adds an additional degree of complexity. In an advantageous embodiment of the present invention, the current is a photocurrent that may be generated only under light irradiation i.e. applied potential bias is not needed. The anion exchange membrane absorbs CO₂, for example from bicarbonate ions (such as sodium bicarbonate) or carbonate ions (such as sodium carbonate) present in seawater, through natural or forced convection to form HCO₃⁻ ions. Forced convection may for example be carried out by using a pump (e.g. a peristaltic or a centrifugal pump) to force / circulate the fluid from which the CO₂ is to be extracted through the device. The device can operate without the forced convection, but this is a possible embodiment to speed up the CO₂ sorption inside the anion exchange membrane. Under solar irradiation, the HCO₃⁻ ions are forced to the other side of the device, i.e. the OER and CO₂ER fluid outlet of the photoanode of the first reactor (117), under the bias free current. The collection step may appropriately be carried out primarily during the night, but collection is also possible in parallel with the transfer step under sunlight irradiation (Fig. 1). The mixture gathered on the opposite side is a mixture of CO₂ and O₂, but preferably a higher concentration of CO₂. The total overpotential losses for performing oxygen evolution and oxygen reduction are around 0.7 V, giving a wide variety of materials with a suitable band-gap to be potential photoelectrodes (Fig.2). When the formation of dihydrogen (H₂) is desired, an operating voltage higher than 1.23 V must be applied.

In the present invention, the anion exchange membrane (AEM) (112, 212, 312, 412) for the first reactor is preferably an alkaline anion exchange membrane. The AEM can appropriately comprise a material selected from the group consisting of: materials containing quaternary ammonium groups (such as those sold under the commercial names: Fumasep^{®} FAA, A201, Orion^{®} TM1, Durion^{®}, Selemion^{®}); low density polyurethane with quaternary ammonium groups; materials containing imidazolium or polybenzimidazole groups (such as those sold under the commercial names: Aemion^{®}, Sustainion^{®}); and tri- or di-amine cross-linked quaternized polysulfones.

In the present invention, appropriate materials for the anode (113, 213, 313, 413), and preferably porous (photo)anode, of the first reactor containing an anion exchange membrane (AEM) (112, 212, 312, 412) are n-type or p-type (photo)electrode materials compatible with AEM with a suitable band-gap (according to Fig. 2). Examples include BiVO₄, TiO₂, WO₃, which can be combined with a (photo)cathode to reach both OER (Oxygen Evolution Reaction) / CO₂ER (CO₂ Electroreduction Reaction) and ORR (Oxygen Reduction Reaction) potentials. TiO₂ is a practical example for device preparation, but the bandgap of TiO₂ is large, essentially restricting absorption to that of UV light. Materials with a smaller band-gap where the conduction band (CB) and valence band (VB) are on either side of the OER / CO₂ER and ORR and, in certain embodiments, HER (Hydrogen Evolution Reaction) reaction potentials are advantageous. A smaller bandgap would enable higher absorption of visible light which allows considerably more energy to be used in practical applications. Materials with the band gap of around 1.0 to 2.0 eV and a conduction band edge lower than around 0.7 eV vs. NHE and valence band at higher than around 1.7 eV vs. NHE are appropriate, NHE (= Normal Hydrogen Electrode) here being a reference electrode and the potential of platinum in a 1 M acid solution (pH = 0). Preferred materials for the anode of the first reactor may be selected from the group consisting of: Ni, Ni Raney^{®}, NiOₓ, CO₂O₃, NiCo₂O₄, NiFe₂O₄, Cu_{0.5}Co_{2.5}O₄, CoPi, SrCoO₃, IrOₓ, RuOₓ, and/or PtOₓ, with x ranging from 0 and 2. When the anode is a photoanode, preferred materials for the photoanode of the first reactor may be selected from the group consisting of: BiVO₄, TaOₓN_{y} with x and y ranging from 0 and 2, LaTiO₂N, BaTaO₂N, SrTaO₂N, WO₃, CuWO₄, Fe₂O₃, ZnFe₂O₄, and/or TiO₂. A particularly preferred list of preferred materials for the photoanode consists of: BiVO₄ and/or TiO₂ because of their high stability. Protective layers or cocatalysts (catalysts on photoelectrodes, the materials may be the same) may enhance performance and / or provide chemical compatibility to the alkaline environment. (Co)catalyst materials for the anode (113, 213, 313, 413) of the first reactor may be one or more of: Ni, Ni Raney, NiCo, NiFe, NiP, CoP, CoPi, SrCoO₃, Ru, Mg, Ag, Au, Fe-OOH, FeNi-OOH, Ni-OOH, Fe₂O₃, Fe₃O₄, FeO, NiO, Ni₂O₃, IrOₓ, CoOH, Pt, Rh, RhOₓ, RuOₓ, and/or PtOₓ, with x ranging from 0 and 2. In a preferred embodiment, the anode of the first reactor and/or the (co)catalyst materials may be covered with at least one layer of MnOₓ (with x ranging from 0 and 2) to prevent chlorine evolution (for example from NaCl contained in seawater) (F. Sun et al., Energy-saving hydrogen production by chlorine-free hybrid seawater splitting coupling hydrazine degradation, Nature Communication, 12, 4182 (2021)).

In the present invention, appropriate materials for the cathode (111, 211, 311, 411), and preferably for the porous (photo)cathode, of the first reactor containing an anion exchange membrane (AEM) (112, 212, 312, 412) are generally speaking p-type (photo)electrode materials compatible with alkaline exchange membranes with a suitable band-gap and edges (according to Fig. 2). Examples of cathode materials include: Pt/C, Pt-Ru/C, Au/C, Ni/C and Ni-felt, preferred among these being: Pt, Pt-Ru/C. Materials with the band gap of around 1.0 to 2.0 eV and a conduction band edge lower than around 0.7 eV vs. NHE and valence band at higher than around 1.7 eV vs. NHE are appropriate. Preferred materials for the photocathode of the first reactor may be selected from the group consisting of: Si, MoS₂, MoSe₂, WS₂, GaP, CdS, CdSe, ZnSe, CuNbO₄, PMPDI, InP, WSe₂, ZnFe₂O₄, CuNbO₃, PMPDI, Cu₂O, g-C₃N₄, CIGS, CIGSe, CaFeO₂, and/or CuFeO₂. Protective layers or (co)catalysts may enhance performance. (Co)catalyst materials for the cathode (111, 211, 311, 411), and preferably porous (photo)cathode, of the first reactor may appropriately include catalysts based on: Ni, Ni Raney, LaNiO₃, LaMnO₃, Ag, Ru, Au, Pt, Pt₃M where M = Ni or Co or Y, PtRu, Co, NiP, CoP, FeP, NiCo, NiFe, NiMo, NiW, Ir, Mg, Ru, Pt, Rh, and/or RhOₓ, with x ranging from 0 and 2. A particularly preferred list of preferred (co)catalysts materials for the cathode consists of: Ni, NiFe, NiMo, and/or Pt. In a preferred embodiment, the cathode of the first reactor and/or the (co)catalyst materials may be covered with at least one layer of MnOₓ (with x ranging from 0 and 2) to prevent chlorine evolution (for example from NaCl contained in seawater).

The carbon dioxide capture device of the invention may comprise a second reactor comprising a proton exchange membrane placed between an anode and a cathode, wherein the cathode of the second reactor has at least a fluid outlet able to carry at least carbon dioxide and water, and the anode of the second reactor has at least a fluid outlet able to carry at least water, and wherein the carbon dioxide capture device is configured to transfer fluid exiting the cathode of the first reactor to the cathode of the second reactor.

The first reactor comprises a proton exchange membrane placed between an anode and a cathode, and preferably between a porous (photo)anode and porous (photo)cathode. The anode of the second reactor may contain or may be connected physically or electrically to oxygen evolution catalyst(s), whilst the cathode may contain or may be connected to an oxygen reduction catalyst and/or hydrogen evolution catalyst.

In the present invention, the proton exchange membrane (PEM) (122, 222, 322, 422) for the second reactor is preferably based on a perfluorocarbonsulfonic acid polymers, polysulfonic acid material (such as those sold commercially under the names: Nafion^{®}, Aquivion^{®}, Fumapem^{®}-F, Fumapem^{®} SX Pemion^{®}), polybenzimidazoles (such as those sold commercially under the names: Celtec^{®}, Fumapem^{®} AM, Fumapem^{®} ST); polyacrylic acids; and hydrocarbon (such as those sold commercially under the names commercial names: Fumatech^{®} ST, Fumatech^{®} P, E) membrane materials.

In the present invention, appropriate materials for the anode (123, 223, 333, 423), and preferably porous (photo)anode, of the second reactor containing a proton exchange membrane (PEM) (122, 222, 322, 422) are similar, although not identical, to the materials described above for the anode, and preferably porous (photo)anode, of the first reactor. In effect, the different environment of the two reactors creates different potential stability issues, with the membrane of the first reactor being alkaline, and the membrane of the second reactor being acidic.

Preferred materials for the anode, and preferably porous (photo)anode of the second reactor, may thus be selected from the group consisting of: BiVO₄, TaOₓN_{y}, with x and y ranging from 0 and 2, LaTiO₂N, BaTaO₂N, CuWO₄, WO₃, and/or TiO₂. Protective layers or (co)catalysts may enhance performance and / or provide chemical compatibility to the alkaline environment. ORR(co)catalysts may advantageously include: Ir, IrOₓ, Rh, RhOₓ, Pt, PtOₓ, Ni, Co, CoOₓ, NiOₓ, MnOₓ, Co phosphate, Mg, Ru, Au, Pt₃M where M = Ni or Co or Y, PtRu, NiP, CoP, FeP, NiCo, NiMo, and/or NiW, with x ranging from 0 and 2. HER (co)catalysts may advantageously include: Pt, Au, MoSₓ, CoP, Ag, and/or Ru, with x ranging from 0 and 2. The ORR and HER (co)catalysts may be used alone or supported, for example on carbon.

In the present invention, appropriate materials for the cathode (121, 221, 321, 421), and preferably porous (photo)cathode, of the second reactor containing a proton exchange membrane (PEM) (122, 222, 322, 422) are similar, although not identical, to the materials described above for the cathode, and preferably porous (photo)cathode, of the first reactor. Examples of cathode materials of the second reactor include: Pt/C, Pt-Ru/C, Au/C, Ni/C and Ni-felt, preferred among these being: Pt, Pt-Ru/C. Preferred materials for the cathode, and preferably porous (photo)cathode, of the second reactor may thus be selected from the group consisting of: Si, MoS₂, MoSe₂, WS₂, GaP, CdS, CdSe, ZnSe, CuNbO₄, PMPDI, InP, WSe₂, ZnFe₂O₄, CuNbO₃, PMPDI, Cu₂O, g-C₃N₄, CIGS, CIGSe, CaFeO₂, and/or CuFeO₂. Protective layers or (co)catalysts may enhance performance. (Co)catalyst materials for the cathode (121, 221, 321, 421), and preferably porous (photo)cathode, of the second reactor may advantageously include: Ru, Au, Pt, Pt₃M where M = Ni, Co, Y, PtRu, NiP, CoP, FeP, NiCo, NiMo, and/or NiW.

Thus, the present invention provides a carbon dioxide capture device wherein:
- the cathode of the first reactor has a fluid inlet and a fluid outlet both able to carry at least one gas and/or one liquid comprising carbonated water, and preferably at least one liquid comprising water, bicarbonate ions (such as sodium bicarbonate), carbonate ions (such as sodium carbonate) and sodium chloride, and more preferably seawater, and the anode of the first reactor has a fluid inlet and a fluid outlet both able to carry at least one gas and/or water, and preferably at least water;
- the cathode of the second reactor has a fluid inlet and a fluid outlet both able to carry at least carbon dioxide and water, and the anode of the second reactor has a fluid inlet and a fluid outlet both able to carry at least water,
wherein the fluid outlet of the cathode of the first reactor is fluidically connected to the fluid inlet of the anode of the second reactor, and the fluid outlet of the anode of the first reactor is fluidically connected to the fluid inlet of the cathode of the second reactor.

In the sense of the invention, the carbonated water can be defined as any water containing CO₂.

In the device of the present invention, in its various embodiments, all of the inlets can be inlets for liquids or gases. In preferred embodiments, incoming water is seawater, and inlets appropriate for liquid transport are preferred. Appropriate outlets for the device of the present invention are also in particular ones appropriate for gas transport.

The first and second reactor may be placed in a consolidated block separated by a separator such that the cathode of the first reactor is situated opposite the anode of the second reactor and separated therefrom by the separator, and the anode of the first reactor is opposite the cathode of the second reactor and separated therefrom by the separator, and a single fluid line including the fluid inlet of the cathode of the first reactor and the fluid outlet of the anode of the second reactor runs along one wall of the consolidated block, and a further single fluid line including the fluid inlet of the anode of the first reactor and the fluid outlet of the cathode of the second reactor runs along another wall of the consolidated block, the two walls facing one another and both being in contact with the separator.

The anodes of the first and second reactors are both preferably photoanodes. However, the light absorber may, instead of being on the anode side, as photoanode(s), be on the cathode side, in an anode-with-photocathode combination for both first and second reactors. Alternatively, for hydrogen evolution, a combination of photoanode and photocathode could be used. In a preferred embodiment, at least one light absorber may be present for both first and second reactors. Thus, cathode-anode combinations where neither is a light absorber are not appropriate but other combinations are possible such as photoanode-cathode, anode-photocathode, and photoanode-photocathode.

In the present invention, the porous (photo)anode and/or porous (photo)cathode of either the first or second reactor may be ionomer coated, which may help to increase CO₂ sorption capacity. The ionomers used for such a coating may notably include ionomer materials mentioned above for use as anion exchange membrane (AEM) or proton exchange membrane (PEM). In the first reactor, with AEM, the loading of ionomer coating is preferably at most 50 mg / cm², more preferably 0.5 to 10 mg / cm². In the second reactor, with PEM, the loading of ionomer coating is preferably at most 50 mg / cm², more preferably 0.5 to 10 mg / cm², still more preferably 1.0 to 5.0 mg / cm², for example about 3.0 mg / cm². The ionomer coating is not necessary to carry out the present invention, and an ionomer coating of the porous (photo)anode and/or porous (photo)cathode of, for example, the second reactor does not necessitate an ionomer coating of the porous (photo)anode and/or porous (photo)cathode of the other, for example the first reactor. Further, the ionomers do not need to be the same on the (photo)anode and (photo)cathode side of either the first or second reactor, but this option is envisaged for the practice of the invention.

The (photo)electrodes used in the present invention, as cathode and anode, and preferably as porous (photo)cathode or porous (photo)anode, of the first or second reactor, are advantageously deposited or grown on, or supported by, a porous electrically conductive support material. In the practice of the present invention, it is the porous conducting supports that in particular provide a porous character to the (photo)cathode or porous (photo)anode constructs rather than the (photo)cathode or porous (photo)anode materials themselves. Appropriate (photo)electrode support materials for the porous (photo)cathode or porous (photo)anode of the first and/or second reactor, are for example porous (e.g. mesh, felt, foam, cloth, paper) substrates associated with carbon, titanium, tungsten, stainless steel, nickel, or conducting oxides. Such porous support materials, which may also be referred to in the art as "gas diffusion electrodes", may appropriately contain 10 to 90%, more preferably 30 to 80% of voids, preferably allowing for fluid penetration, and in particular gas transfer. The porous support materials may for example be in the form of a mesh or felt. A mesh, a single layer of porous material, may show 10 to 80% of voids (open area), preferably 20-60 % of voids. The surface area of the porous support material may appropriately be in the range of 10 to 1000 cm² per cm² geometrical area (for felts). The porous support materials may appropriately show a bulk layer thickness of 1 to 1000 microns, preferably 100 to 400 microns. In terms of photoelectrode thicknesses, at most 5 micrometres and preferably at most 1 micrometre is generally appropriate. On such porous support materials, (photo)cathode or (photo)anode materials selected in particular to promote electrocatalytic reactions, as will be described in more detail below, may be deposited. The thickness of the porous (photo)cathode or porous (photo)anode materials may be less than 5 microns, more preferably less than 1 micron, for example around 300 nm. Appropriate (co)catalyst materials may be provided as a layer preferably of thickness less than 200 nm, more preferably less than 50 nm. For (photo)cathode or (photo)anode materials, co-catalyst materials may provide a performance gain of as much as 100 times. The amount of added (photo)electrode materials selected in particular to promote oxygen reduction or oxygen evolution and/or carbon dioxide evolution, may typically be 1% by mass or less as compared to the mass of the porous support materials, for example in the form of a mesh, felt or foam, and the amount of added (co)catalyst material(s) will typically be less than that of the added materials.

In the device of the present invention, there may be an electrically conducting wire between the (photo)anode and (photo)cathode of the first and/or second reactor. This means that the (photo)anode and (photo)cathode of either reactor would not necessary need to be close to one another - the (photo)cathode could be in a different chamber provided it has an electrical connection. Most appropriately, the (photo)anode and (photo)cathode are connected through an electrical contact between them, such as a wire. Electricity generated can be used for a lamp or forced convention in advantageous functioning of the device of the invention.

In particular, in a preferred embodiment, the fluid inlet of the cathode of the first reactor comprises a convection system, preferably a pump, and more preferably a peristatic or a centrifugal pump connected to a power supply, to bring seawater comprising water, bicarbonate ions (such as sodium bicarbonate), carbonate ions (such as sodium carbonate) and sodium chloride, in the fluid inlet.

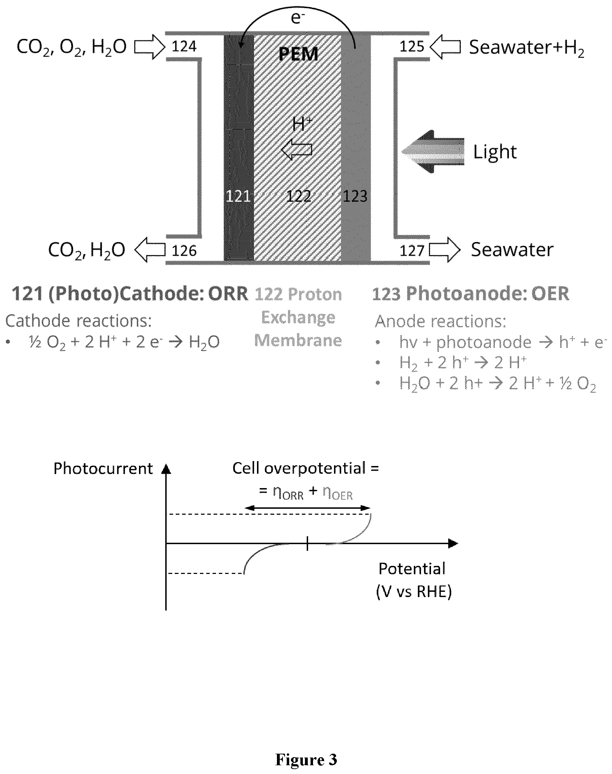

The function of the second reactor is to convert any remaining O₂ in the CO₂ / O₂ mixture, which can be transferred to the second reactor via piping, into water to facilitate the purification of the CO₂ (separation of liquid and gas). The second reactor comprises a proton exchange membrane placed between a anode, and preferably a porous (photo)anode, and a cathode, and preferably a porous (photo)cathode. The (photo)anode is connected physically or electrically to an oxygen evolution catalyst, whilst the (photo)cathode is connected to an oxygen reduction catalyst (Fig. 3). The CO₂ / water mixture can be easily separated and can be stored / used for other applications.

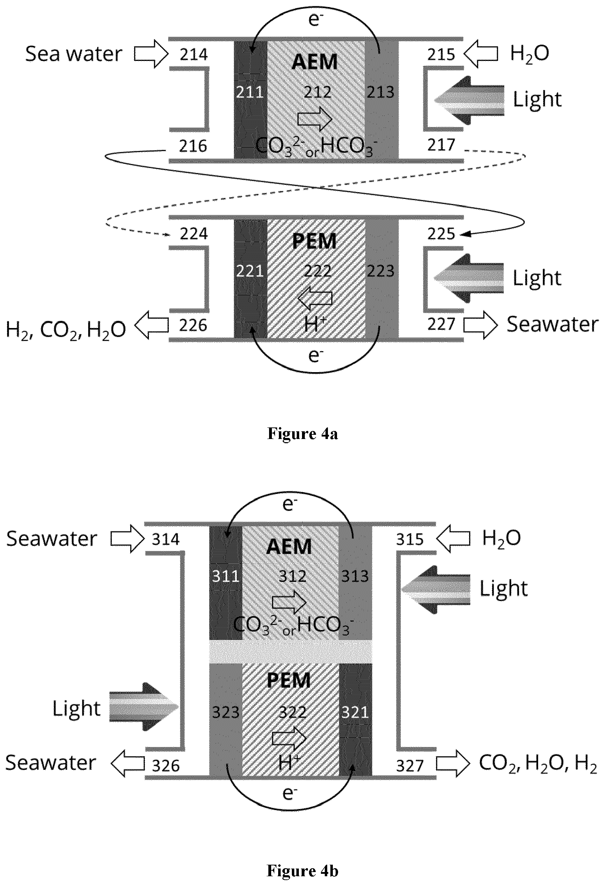

There is potential for the capture and separation functions to be combined into one device, for example, the two configurations shown in Fig. 4.

Thus in a device for which an exemplary embodiment is illustrated in Fig. 4a, the present invention provides a carbon dioxide capture device wherein:
- the porous (photo)cathode of the first reactor has a fluid inlet and a fluid outlet both able to carry carbon dioxide in liquid, and the porous (photo)anode of the first reactor has a fluid inlet and a fluid outlet both able to carry water and oxygen;
- the porous (photo)cathode of the second reactor has a fluid inlet and a fluid outlet able both to carry carbon dioxide, oxygen and water, and the porous (photo)anode of the second reactor has a fluid inlet and a fluid outlet both able to carry water and oxygen,
wherein the fluid outlet of the porous (photo)cathode of the first reactor is fluidically connected to the fluid inlet of the porous (photo)anode of the second reactor, and the fluid outlet of the porous (photo)anode of the first reactor is fluidically connected to the fluid inlet of the porous (photo)cathode of the second reactor.

Thus in a device for which an exemplary embodiment is illustrated in Fig. 4b, the present invention provides a carbon dioxide capture device wherein:
the first and second reactor are placed in a consolidated block separated by a separator such that the porous (photo)cathode of the first reactor is situated opposite the porous (photo)anode of the second reactor and separated therefrom by the separator, and the porous (photo)anode of the first reactor is opposite the porous (photo)cathode of the second reactor and separated therefrom by the separator, and a single fluid line including the fluid inlet of the porous (photo)cathode of the first reactor and the fluid outlet of the porous (photo)anode of the second reactor runs along one wall of the consolidated block, and a further single fluid line including the fluid inlet of the porous (photo)anode of the first reactor and the fluid outlet of the porous (photo)cathode of the second reactor runs along another wall of the consolidated block, the two walls facing one another and both being in contact with the separator. The hashed border region in the middle of Fig. 4b is a frame / space to separate the first and second reactor. The essential function of the hashed border region is to avoid contact between the two reactors.

In a preferred embodiment, the structural elements of the carbon dioxide capture device of the invention, such as the first reactor, the second reactor, the separator, the pump, the substrate, the housing, are made of metal, resin, composite resin and/or glass, and preferably comprise a material selected from the group consisting of: Fe, Cr, Ti, Si, S, Ni, Cu, Co, N, Mn, P, Mo, Nb, Ta, Al, O, F, H, and/or C, and preferably the structural element of the device are made in stainless steel and comprise a material selected from the group consisting of C, Cr, Mn, P, Si, S, Ni, Cu, Mo and/or N; in Inconel (a super alloy containing Ni, Cr, Fe, Mn and Ti) and comprise a material selected from the group consisting of Ni, Cr, Fe, Mo, Nb, Ta, Co, Mn, Cu, Al, Ti, and/or C; in plastic and comprise a material selected from the group consisting of H, O, N and F.

Another subject-matter of the invention concerns the use of a carbon dioxide capture device according to the invention for the treatment of liquids comprising water, bicarbonate ions (such as sodium bicarbonate), carbonate ions (such as sodium carbonate) and sodium chloride, preferably for removing carbon dioxide from such liquids. In a preferred embodiment, the invention concerns the use of a carbon dioxide capture device according to the invention for the treatment of seawater, preferably for removing carbon dioxide from seawater.

Finally, the invention also aims at a method for treating a liquid comprising water, bicarbonate ions (such as sodium bicarbonate), carbonate ions (such as sodium carbonate) and sodium chloride comprising the step of introducing the liquid comprising water, bicarbonate ions (such as sodium bicarbonate), carbonate ions (such as sodium carbonate) and sodium chloride, into a carbon dioxide capture device according to the invention, preferably via the fluid inlet of the cathode of the first reactor of the carbon dioxide capture device of the invention. In a preferred embodiment, the invention aims at a method for treating seawater comprising the step of introducing seawater comprising water, bicarbonate ions (such as sodium bicarbonate), carbonate ions (such as sodium carbonate) and sodium chloride, into a carbon dioxide capture device according to the invention, preferably via the fluid inlet of the cathode of the first reactor of the carbon dioxide capture device of the invention.

In the method for treating seawater of the invention, the step of introducing seawater into the carbon dioxide capture device of the invention may be carried out by natural convection, preferably by floating the carbon dioxide capture device of the invention on the surface of seawater, or by a convection system, preferably with a pump, and more preferably a peristatic or a centrifugal pump connected to a power supply.

### EXAMPLE

### Photoanode preparation

Ti felt with 0.4 mm felt thickness, 20 µm wire thickness and 80% porosity, Bekaert, was used to prepare the TiO₂ photoanode. Prior to the O₂ annealing procedure, the samples underwent a cleaning process using acetone and ethanol for 20 minutes respectively in a sonic bath. Then, the samples were rinsed with deionized water and dried under air flow in room temperature. The Ti felts were annealed at 600°C for 2 hours under air atmosphere in order to grow a thick and crystalline oxide layer around the microfibers.

### PEM-PEC cell assembly and product analysis

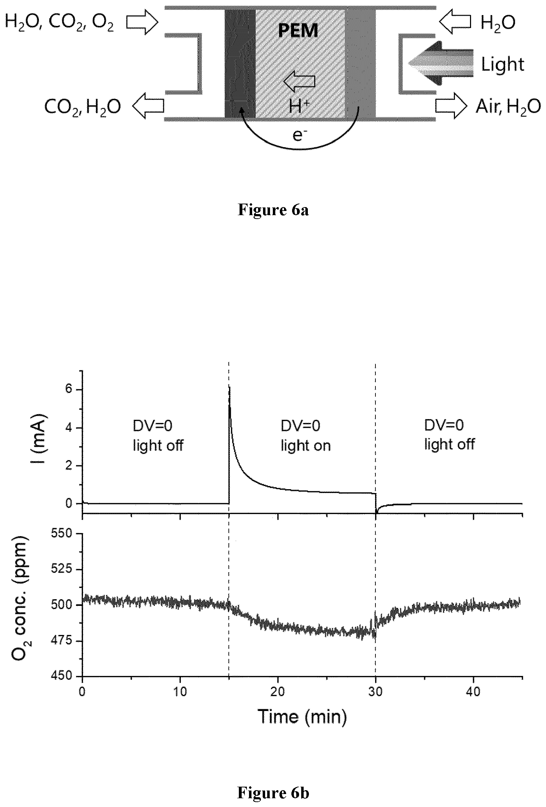

An Aemion^{™} membrane of 50 µm thickness was used for the membrane electrode assembly. The membrane was soaked overnight in 1 M KOH for activation. The Ti02/Ti-felt photoanode was placed on top of the membrane, while the Pt/C (0.5 mg cm⁻²) cathode was placed on the bottom side. The photoelectrochemical CO₂ capture studies from sea water were studied using an electrochemical work station supplied by Ivium (Vertex). Transient chronoamperometric measurements under short circuit condition were performed with UV irradiation (M365P1, 365 ± 15 nm, ThorLabs, 15 mW·cm⁻²) on the photoanode. The UV irradiation generates charge (photocurrent - I (mA) - Fig.6) which pushes the ions across the anion exchange membrane (Fig. 1). 250 ml of simulated seawater (0.5 M NaCl and 2.5 mM NaHCO₃) at 50 sccm flow rate was recirculated on the cathode side and the gases produced on the photoanode side were constantly monitored. The gases collected on the opposite side of the first reactor (Fig.6) are at a ratio of approx. 2:1 O₂:CO₂, corresponding to a Faradaic Efficiency of ~100%. CO₂ is obtained in the fluid output, as shown at the bottom right of Fig. 1 as part of the gaseous mixture H₂O, O₂, and CO₂. On the cathode side a nitrogen flow of 45 sccm was maintained throughout the experiment. The gas products were analysed using a Non Dispersive Infrared (NDIR) single beam gas analyser (Fuji Electric) for the analysis of the CO₂ gas and the oxygen level was monitored using a OXY-1 SMA Trace sensor from PreSens.

**Table 1:**

| Photocurrent (mA) | CO₂ evolved | O₂ evolved |
|---|---|---|
| | Theoretical ppm levels for CO₂ separation via CO₃²⁻ route | |
| 0.17 | 19 | 9.5 |
| | Experimental values | |
| -0.17 | 20 | 11 |

| | | |
|---|---|---|
| CO₂ to O₂ ratio is ~2 which corresponds to a selectivity to CO₃²⁻ route (Faradaic efficiency) of ~100%. | | |

OER here is a reference to a type of reaction (oxygen evolution reaction) CO₂ER refers to the CO₂ evolution reaction. OER (ppm) refers to the levels of oxygen in the fluid outlet (117, 217) of the first reactor and CO₂ER (ppm) to the levels of CO₂ in in the fluid outlet (117, 217) side of the first reactor.

The carbon dioxide capture and separation in a (OH⁻)-PEC cell was carried out here with:
- Membrane: Grafted LDPE anion exchange membrane (AEM). Here, LDPE is low-density polyethylene
- Photoanode: TiO₂/Ti-felt (substrate)
- Anolyte (inlet anode): humidified N₂ (80% relative humidity)
- Flow rate catholyte: 45 sccm
- Cathode: Pt/C
- Catholyte (inlet cathode): 0.5 M NaCl + 2.5 mM NaHCO₃ in aqueous solution
- Flow rate catholyte: 50 sccm
- UV lamp: 7 mW cm⁻² intensity
The data shows a CO₂ and O₂ signals which are stable and which correspond to around ~100% faradaic efficiency (selectivity to CO₂ transport via the CO₃²⁻ ionic agent route).

Here "(AEM)-PEC cell" refers to the first reactor, containing a anion exchange membrane. The PEC stands for "photoelectrochemical". The second reactor is the (PEM)-PEC cell, also containing an anion exchange membrane.

Different cathodes have been tested for the oxygen reduction reaction / CO₂ER. Pt / Ru, Au and Ni. Pt / Ru and Pt have given promising results and are considered among the preferred choices.

The next step is the conversion from O₂ to H₂O through the proton exchange membrane, again through oxygen reduction and oxygen evolution cycling (Fig.3). Again the reaction starts when light is shone on the device to generate charge carriers, which push the H⁺ ions through the membrane. A clear drop in O₂ concentration can be seen when the light is on.

The oxygen purification in a PEM(H⁺)-PEC cell was carried out here with:
- Inlet-Anode: 500 ppm CO₂ + 500 ppm O₂ + 3% H₂O in He;
- Inlet-Cathode: 2% H₂O;
- Flow rate: 50 sccm (standard cubic centimetres per minute)
- Electrolyte: Nafion^{®} proton exchange membrane (PEM)
- Photoanode: TiO₂/Ti-felt, ionomer coated Nafion^{®}
- Cathode: Pt/C
- UV lamp: 7 mW cm⁻²

The data shows a CO₂ signal which is stable and an O₂ signal decreased by 25 ppm which corresponds to around 65% faradaic efficiency (selectivity to oxygen consumption vs hydrogen evolution reaction).

### Summary of Reference Numerals

### 1: First reactor

111, 211, 311, 411: (Photo)cathode of first reactor
112, 212, 312, 412: Anion Exchange Membrane (AEM) of first reactor
113, 213, 313, 413: Photoanode of first reactor
114, 214, 314, 414: Fluid inlet of (photo)cathode of first reactor
115, 215, 315, 415: Fluid inlet of photoanode of first reactor
116, 216: Fluid outlet of (photo)cathode of first reactor
117, 217: Fluid outlet of photoanode of first reactor

### 2: Second reactor

121, 221, 321, 421: (Photo)cathode of second reactor
122, 222, 322, 422: Proton Exchange Membrane (PEM) of second reactor
123, 223, 323, 423: Photoanode of second reactor
124, 224: Fluid inlet of (photo)cathode of second reactor
125, 225: Fluid inlet of photoanode of second reactor
126, 226, 326, 426: Fluid outlet of (photo)cathode of second reactor
127, 227, 327, 427: Fluid outlet of photoanode of second reactor
330, 430: Separator for consolidated block assembly of first and second reactors.

## Claims

1. A carbon dioxide capture device comprising:
a first reactor comprising an anion exchange membrane placed between an anode and a cathode,
wherein the cathode of the first reactor has at least a fluid inlet able to carry at least one gas and/or one liquid comprising carbonated water, and the anode of the first reactor has at least a fluid inlet able to carry at least one gas and/or water, and
wherein, by applying current, an oxygen evolution reaction and/or a carbon dioxide evolution reaction occur at the anode, an oxygen reduction reaction and/or a carbon dioxide reduction reaction occur at the cathode, and the anion exchange membrane carries at least hydrogen carbonate (HCO₃⁻) and/or carbonate (CO₃²⁻) ions from cathode to anode, and generates carbon dioxide (CO₂)at the anode.

2. A carbon dioxide capture device according to claim 1 comprising:
a first reactor comprising an anion exchange membrane placed between an anode and a cathode, and preferably a photoanode and a photocathode,
wherein the cathode of the first reactor has at least a fluid inlet able to carry at least one liquid comprising water (H₂O), bicarbonate ions, carbonate ions and sodium chloride (NaCI), and the anode of the first reactor has at least a fluid inlet able to carry water (H₂O), and
wherein, by applying current, and preferably photocurrent, generated by the anode and/or the cathode, an oxygen evolution reaction and/or a carbon dioxide evolution reaction occur at the anode, an oxygen reduction reaction and/or a carbon dioxide reduction reaction occur at the cathode, and the anion exchange membrane carries hydrogen carbonate (HCO₃⁻) and/or carbonate (CO₃²⁻) ions from cathode to anode, and generates carbon dioxide (CO₂) at the anode.

3. A carbon dioxide capture device according to claim 1 or claim 2, wherein the anion exchange membrane for the first reactor is an alkaline anion exchange membrane.

4. A carbon dioxide device according to any of claims 1 to 3, wherein the anion exchange membrane for the first reactor comprises a material selected from the group consisting of: materials containing quaternary ammonium groups; low density polyurethane with quaternary ammonium groups; materials containing imidazolium or polybenzimidazole groups; and tri- or di-amine cross-linked quaternized polysulfones.

5. A carbon dioxide capture device according to any of claims 1 to 4, wherein the anode of the first reactor comprises one or more of Ni, Ni Raney^{®}, NiOₓ, Co₂O₃, NiCo₂O₄, NiFe₂O₄, Cu_{0.5}Co_{2.5}O₄, CoPi, SrCoO₃, IrOₓ, RuOₓ, and/or PtOₓ, with x ranging from 0 and 2, preferably the anode of the first reactor is a photoanode comprising one or more of: BiVO₄, TaOₓN_{y} with x and y ranging from 0 and 2, LaTiO₂N, BaTaO₂N, SrTaO₂N, WO₃, CuWO₄, Fe₂O₃, ZnFe₂O₄, and/or TiO₂, and more preferably BiVO₄ and/or TiO₂, and may further include (co)catalyst materials based on one or more of: Ni, Ni Raney, NiCo, NiFe, NiP, CoP, CoPi, SrCoO₃, Ru, Mg, Ag, Au, Fe-OOH, FeNi-OOH, Ni-OOH, Fe₂O₃, Fe₃O₄, FeO, NiO, Ni₂O₃, IrOₓ, CoOH, Pt, Rh, RhOₓ, RuOₓ, and/or PtOₓ, with x ranging from 0 and 2.

6. A carbon dioxide capture device according to claim 5, wherein the anode of the first reactor and/or the (co)catalyst materials are covered with at least one layer of MnOₓ, with x ranging from 0 and 2.

7. A carbon dioxide capture device according to any of claims 1 to 6, wherein the cathode of the first reactor comprises one or more of Pt/C, Pt-Ru/C, Au/C, Ni/C and Ni-felt, preferably Pt, Pt-Ru/C, and more preferably the cathode of the first reactor is a photocathode comprising one or more of: Si, MoS₂, MoSe₂, WS₂, GaP, CdS, CdSe, ZnSe, CuNbO₄, PMPDI, InP, WSe₂, ZnFe₂O₄, CuNbO₃, PMPDI, Cu₂O, g-C₃N₄, CIGS, CIGSe, CaFeO₂, CuFeO₂, and may further include (co)catalyst materials based on one or more of: Ni, Ni Raney, LaNiO₃, LaMnO₃, Ag, Ru, Au, Pt, Pt₃M where M = Ni or Co or Y, PtRu, Co, NiP, CoP, FeP, NiCo, NiFe, NiMo, NiW, Ir, Mg, Ru, Pt, Rh, and/or RhOₓ, with x ranging from 0 and 2, and preferably based on one or more of: Ni, NiFe, NiMo, and Pt.

8. A carbon dioxide capture device according to claim 7, wherein the cathode of the first reactor and/or the (co)catalyst materials are covered with at least one layer of MnOₓ, with x ranging from 0 and 2.

9. A carbon dioxide capture device according to any of claims 1 to 8, wherein the anode of the anion exchange membrane contains or is connected physically or electrically to oxygen evolution and/or carbon dioxide evolution catalyst(s), and the cathode of the anion exchange membrane contains or is connected physically or electrically to a hydrogen evolution catalyst and/or an oxygen reduction catalyst.

10. A carbon dioxide capture device according to any of claims 1 to 9, comprising:
a second reactor comprising a proton exchange membrane placed between an anode and a cathode,
wherein the cathode of the second reactor has at least a fluid outlet able to carry at least carbon dioxide and water, and the anode of the second reactor has at least a fluid outlet able to carry at least water, and
wherein the carbon dioxide capture device is configured to transfer fluid exiting the cathode of the first reactor to the cathode of the second reactor.

11. A carbon dioxide capture device according to any of claims 1 to 10, wherein the proton exchange membrane for the second reactor comprises a material selected from the group consisting of: perfluorocarbonsulfonic acid polymers; polysulfonic acid polymers; polybenzimidazoles; polyacrylic acids; and hydrocarbon membrane materials.

12. A carbon dioxide capture device according to any of claims 1 to 11, wherein the anode of the second reactor comprises one or more of Ni, Ni Raney^{®}, NiOₓ, Co₂O₃, NiCo₂O₄, NiFe₂O₄, Cu_{0.5}Co_{2.5}O₄, CoPi, SrCoO₃, IrOₓ, RuOₓ, and/or PtOₓ, with x ranging from 0 and 2, and preferably the anode of the second reactor is a photoanode comprising one or more of: BiVO₄, TaOₓN_{y} with x and y ranging from 0 and 2, LaTiO₂N, BaTaO₂N, CuWO₄, WO₃, and/or TiO₂, and may further include ORR (co)catalyst materials based on one or more of: Ir, IrOₓ, Rh, RhOₓ, Pt, PtOₓ, Ni, Co, CoOₓ, NiOₓ, MnOₓ, Co phosphate, Mg, Ru, Au, Pt₃M where M = Ni or Co or Y, PtRu, NiP, CoP, FeP, NiCo, NiMo, and/or NiW, with x ranging from 0 and 2, or HER (co)catalyst materials based on one or more of: Pt, Au, MoSₓ, CoP, Ag, and/or Ru, with x ranging from 0 and 2.

13. A carbon dioxide capture device according to any of claims 1 to 12, wherein the cathode of the second reactor comprises one or more of Pt/C, Pt-Ru/C, Au/C, Ni/C and Ni-felt, preferably Pt, Pt-Ru/C, and more preferably the cathode of the second reactor is a photocathode comprising one or more of: Si, MoS₂, MoSe₂, WS₂, GaP, CdS, CdSe, ZnSe, CuNbO₄, PMPDI, InP, WSe₂, ZnFe₂O₄, CuNbO₃, PMPDI, Cu₂O, g-C₃N₄, CIGS, CIGSe, CaFeO₂, and/or CuFeO₂, and may further include (co)catalyst materials based on: Ru, Au, Pt, Pt₃M where M = Ni, Co, Y, PtRu, NiP, CoP, FeP, NiCo, NiMo, and/or NiW.

14. A carbon dioxide capture device according to any of claims 1 to 13, wherein the anode of the proton exchange membrane contains or is connected physically or electrically to an oxygen evolution catalyst, and the cathode of the proton exchange membrane contains or is connected physically or electrically to an oxygen reduction catalyst.

15. A carbon dioxide capture device according to any of claims 1 to 14, wherein the anode of the first reactor and/or the anode of the second reactor and/or the cathode of the first reactor and/or the cathode of the second reactor comprise(s) porous substrates, such as those in mesh, felt or foam form, the porous substrates comprising a material selected from the group consisting of: carbon; titanium; tungsten; stainless steel; nickel; and conducting oxides.

16. A carbon dioxide capture device according to any of claims 1 to 15, wherein:
- the cathode of the first reactor has a fluid inlet and a fluid outlet both able to carry at least one gas and/or one liquid comprising carbonated water, and preferably at least one liquid comprising water, bicarbonate ions, carbonate ions and sodium chloride, and the anode of the first reactor has a fluid inlet and a fluid outlet both able to carry at least one gas and/or water, and preferably at least water;
- the cathode of the second reactor has a fluid inlet and a fluid outlet both able to carry at least carbon dioxide and water, and the anode of the second reactor has a fluid inlet and a fluid outlet both able to at least carry water,
wherein the fluid outlet of the cathode of the first reactor is fluidically connected to the fluid inlet of the anode of the second reactor, and the fluid outlet of the anode of the first reactor is fluidically connected to the fluid inlet of the cathode of the second reactor.

17. A carbon dioxide capture device according to any of claims 1 to 16, wherein the first and second reactor are placed in a consolidated block separated by a separator such that the cathode of the first reactor is situated opposite the anode of the second reactor and separated therefrom by the separator, and the anode of the first reactor is opposite the cathode of the second reactor and separated therefrom by the separator, and a single fluid line including the fluid inlet of the cathode of the first reactor and the fluid outlet of the anode of the second reactor runs along one wall of the consolidated block, and a further single fluid line including the fluid inlet of the anode of the first reactor and the fluid outlet of the cathode of the second reactor runs along another wall of the consolidated block, the two walls facing one another and both being in contact with the separator.

18. A carbon dioxide capture device according to any of claims 1 to 17, wherein the fluid inlet of the cathode of the first reactor comprises a convection system, preferably a pump, and more preferably a peristatic or a centrifugal pump connected to a power supply.

19. A carbon dioxide capture device according to any of claims 1 to 18, wherein the structural elements of the device are made of metal, resin, composite resin and/or glass, and comprise a material selected from the group consisting of: Fe, Cr, Ti, Si, S, Ni, Cu, Co, N, Mn, P, Mo, Nb, Ta, Al, O, F, H and/or C, and preferably the structural element of the device are made in stainless steel and comprise a material selected from the group consisting of C, Cr, Mn, P, Si, S, Ni, Cu, Mo and/or N; in Inconel and comprise a material selected from the group consisting of Ni, Cr, Fe, Mo, Nb, Ta, Co, Mn, Cu, Al, Ti, and/or C; in plastic and comprise a material selected from the group consisting of H, O, N and F.

20. Use of a carbon dioxide capture device according to any of claims 1 to 19 for the treatment of carbonated water emitted by factories, vehicles or energy plants, preferably for removing carbon dioxide from said carbonated water.

21. Use of a carbon dioxide capture device according to any of claims 1 to 19 for the treatment of liquids comprising water, bicarbonate ions, carbonate ions and sodium chloride, preferably for removing carbon dioxide from said liquids.

22. Use of a carbon dioxide capture device according to claim 21 for the treatment of seawater, preferably for removing carbon dioxide from seawater.

23. A method for treating a liquid comprising water, bicarbonate ions, carbonate ions and sodium chloride comprising the step of introducing the liquid comprising water, bicarbonate ions, carbonate ions and sodium chloride, into the carbon dioxide capture device according to any of claims 1 to 19, preferably via the fluid inlet of the cathode of the first reactor of the carbon dioxide capture device according to any of claims 1 to 19.

24. A method for treating a liquid comprising water, bicarbonate ions, carbonate ions and sodium chloride according to claim 23, wherein the step of introducing a liquid comprising water, bicarbonate ions, carbonate ions and sodium chloride into the carbon dioxide capture device according to any of claims 1 to 19 is carried out by natural convection, preferably by floating the carbon dioxide capture device according to any of claims 1 to 19 on the surface of the liquid comprising water, bicarbonate ions, carbonate ions and sodium chloride, or by a convection system, preferably with a pump, and more preferably with a peristatic or a centrifugal pump connected to a power supply.

25. A method for treating a liquid comprising water, bicarbonate ions, carbonate ions and sodium chloride according to claim 23 or claim 24, wherein the liquid comprising water, bicarbonate ions, carbonate ions and sodium chloride is seawater.

## Amended claims

### Amended claims in accordance with Rule 137(2) EPC.

1. A carbon dioxide capture device comprising:
a first reactor comprising an anion exchange membrane (112, 212, 312, 412) placed between a photoanode (113, 213, 313, 413) and a photocathode (111, 211, 311, 411),
wherein the photocathode of the first reactor has at least a fluid inlet (114, 214, 314, 414) and a fluid outlet (116, 216) both able to carry at least one liquid comprising carbonated water, and the photoanode of the first reactor has at least a fluid inlet (115, 215, 315, 415) and a fluid outlet (117, 217) both able to carry water (H₂O), and
wherein, by applying photocurrent, generated by the photoanode and the photocathode, an oxygen evolution reaction and a carbon dioxide evolution reaction occur at the photoanode, an oxygen reduction reaction and a carbon dioxide reduction reaction occur at the photocathode, and the anion exchange membrane carries hydrogen carbonate (HCO₃) and/or carbonate (CO₃²⁻) ions from photocathode to photoanode, and generates carbon dioxide (CO₂) at the photoanode,
wherein the anion exchange membrane for the first reactor is an alkaline anion exchange membrane, which comprises a material selected from the group consisting of: materials containing quaternary ammonium groups; low density polyurethane with quaternary ammonium groups; materials containing imidazolium or polybenzimidazole groups; and tri- or di-amine cross-linked quaternized polysulfones,
wherein the photoanode of the first reactor comprises one or more of Ni, Ni Raney^{®}, NiOₓ, Co₂O₃, NiCo₂O₄, NiFe₂O₄, Cu_{0.5}Co_{2.5}O₄, CoPi, SrCoO₃, IrOₓ, RuOₓ, and/or PtOₓ, with x ranging from 0 and 2, and may further include (co)catalyst materials based on one or more of: Ni, Ni Raney, NiCo, NiFe, NiP, CoP, CoPi, SrCoO₃, Ru, Mg, Ag, Au, Fe-OOH, FeNi-OOH, Ni-OOH, Fe₂O₃, Fe₃O₄, FeO, NiO, Ni₂O₃, IrOₓ, CoOH, Pt, Rh, RhOₓ, RuOₓ, and/or PtOₓ, with x ranging from 0 and 2,
wherein the photoanode of the first reactor and/or the (co)catalyst materials are covered with at least one layer of MnOₓ, with x ranging from 0 and 2,
wherein the photocathode of the first reactor comprises one or more of Pt/C, Pt-Ru/C, Au/C, Ni/C and Ni-felt, preferably Pt, Pt-Ru/C, and may further include (co)catalyst materials based on one or more of: Ni, Ni Raney, LaNiO₃, LaMnO₃, Ag, Ru, Au, Pt, Pt₃M where M = Ni or Co or Y, PtRu, Co, NiP, CoP, FeP, NiCo, NiFe, NiMo, NiW, Ir, Mg, Ru, Pt, Rh, and/or RhOₓ, with x ranging from 0 and 2, and preferably based on one or more of: Ni, NiFe, NiMo, and Pt,
wherein the photocathode of the first reactor and/or the (co)catalyst materials are covered with at least one layer of MnOₓ, with x ranging from 0 and 2, and
wherein the photoanode of the anion exchange membrane contains or is connected physically or electrically to oxygen evolution and/or carbon dioxide evolution catalyst(s), and the photocathode of the anion exchange membrane contains or is connected physically or electrically to a hydrogen evolution catalyst and/or an oxygen reduction catalyst.

2. A carbon dioxide capture device according to claim 1, wherein the photoanode of the first reactor is a photoanode comprising one or more of: BiVO₄, TaOₓN_{y} with x and y ranging from 0 and 2, LaTiO₂N, BaTaO₂N, SrTaO₂N, WO₃, CuWO₄, Fe₂O₃, ZnFe₂O₄, and/or TiO₂, and more preferably BiVO₄ and/or TiO₂.

3. A carbon dioxide capture device according to claim 1 or claim 2, wherein the photocathode of the first reactor is a photocathode comprising one or more of: Si, MoS₂, MoSe₂, WS₂, GaP, CdS, CdSe, ZnSe, CuNbO₄, PMPDI, InP, WSe₂, ZnFe₂O₄, CuNbO₃, PMPDI, Cu₂O, g-C₃N₄, CIGS, CIGSe, CaFeO₂, CuFeO₂.

4. A carbon dioxide capture device according to any of claims 1 to 3, comprising:
a second reactor comprising a proton exchange membrane (122, 222, 322, 422) placed between a photoanode (123, 223, 323, 423) and a photocathode (121, 221, 321, 421),
wherein the photocathode of the second reactor has at least a fluid outlet (126, 226, 326, 426) able to carry at least carbon dioxide and water, and the photoanode of the second reactor has at least a fluid outlet (127, 227, 327, 427) able to carry at least water, and
wherein the carbon dioxide capture device is configured to transfer fluid exiting in the photocathode of the first reactor to the photoanode of the second reactor.

5. A carbon dioxide capture device according to claim 4, wherein the proton exchange membrane for the second reactor comprises a material selected from the group consisting of: perfluorocarbonsulfonic acid polymers; polysulfonic acid polymers; polybenzimidazoles; polyacrylic acids; and hydrocarbon membrane materials.

6. A carbon dioxide capture device according to claim 4 or claim 5, wherein the photoanode of the second reactor comprises one or more of Ni, Ni Raney^{®}, NiOₓ, Co₂O₃, NiCo₂0₄, NiFe₂O₄, Cu_{0.5}Co_{2.5}O₄, CoPi, SrCoO₃, IrOₓ, RuOₓ, and/or PtOₓ, with x ranging from 0 and 2, and preferably the photoanode of the second reactor is a photoanode comprising one or more of: BiVO₄, TaOₓN_{y} with x and y ranging from 0 and 2, LaTiO₂N, BaTaO₂N, CuWO₄, WO₃, and/or TiO₂, and may further include ORR (co)catalyst materials based on one or more of: Ir, IrOₓ, Rh, RhOₓ, Pt, PtOₓ, Ni, Co, CoOₓ, NiOₓ, MnOₓ, Co phosphate, Mg, Ru, Au, Pt₃M where M = Ni or Co or Y, PtRu, NiP, CoP, FeP, NiCo, NiMo, and/or NiW, with x ranging from 0 and 2, or HER (co)catalyst materials based on one or more of: Pt, Au, MoSₓ, CoP, Ag, and/or Ru, with x ranging from 0 and 2.

7. A carbon dioxide capture device according to any of claims 4 to 6, wherein the photocathode of the second reactor comprises one or more of Pt/C, Pt-Ru/C, Au/C, Ni/C and Ni-felt, preferably Pt, Pt-Ru/C, and more preferably the photocathode of the second reactor is a photocathode comprising one or more of: Si, MoS₂, MoSe₂, WS₂, GaP, CdS, CdSe, ZnSe, CuNbO₄, PMPDI, InP, WSe₂, ZnFe₂O₄, CuNbO₃, PMPDI, Cu₂O, g-C₃N₄, CIGS, CIGSe, CaFeO₂, and/or CuFeO₂, and may further include (co)catalyst materials based on: Ru, Au, Pt, Pt₃M where M = Ni, Co, Y, PtRu, NiP, CoP, FeP, NiCo, NiMo, and/or NiW.

8. A carbon dioxide capture device according to any of claims 4 to 7, wherein the photoanode of the proton exchange membrane contains or is connected physically or electrically to an oxygen evolution catalyst, and the photocathode of the proton exchange membrane contains or is connected physically or electrically to an oxygen reduction catalyst.

9. A carbon dioxide capture device according to any of claims 4 to 8, wherein the photoanode of the first reactor and/or the photoanode of the second reactor and/or the photocathode of the first reactor and/or the photocathode of the second reactor comprise(s) porous substrates, such as those in mesh, felt or foam form, the porous substrates comprising a material selected from the group consisting of: carbon; titanium; tungsten; stainless steel; nickel; and conducting oxides.

10. A carbon dioxide capture device according to any of claims 4 to 9, wherein:
- the photocathode of the first reactor has a fluid inlet and a fluid outlet both able to carry at least one liquid comprising carbonated water, and preferably at least one liquid comprising water, bicarbonate ions, carbonate ions and sodium chloride, and the photoanode of the first reactor has a fluid inlet and a fluid outlet both able to carry water;
- the photocathode of the second reactor has a fluid inlet (124, 224) and a fluid outlet both able to carry at least carbon dioxide and water, and the photoanode of the second reactor has a fluid inlet (125, 225) and a fluid outlet both able to at least carry water,
wherein the fluid outlet of the photocathode of the first reactor is fluidically connected to the fluid inlet of the photoanode of the second reactor, and the fluid outlet of the photoanode of the first reactor is fluidically connected to the fluid inlet of the photocathode of the second reactor.

11. A carbon dioxide capture device according to any of claims 4 to 10, wherein the first and second reactor are placed in a consolidated block separated by a separator such that the photocathode of the first reactor is situated opposite the photoanode of the second reactor and separated therefrom by the separator, and the photoanode of the first reactor is opposite the photocathode of the second reactor and separated therefrom by the separator, and a single fluid line including the fluid inlet of the photocathode of the first reactor and the fluid outlet of the photoanode of the second reactor runs along one wall of the consolidated block, and a further single fluid line including the fluid inlet of the photoanode of the first reactor and the fluid outlet of the photocathode of the second reactor runs along another wall of the consolidated block, the two walls facing one another and both being in contact with the separator.

12. A carbon dioxide capture device according to any of claims 1 to 11, wherein the fluid inlet of the photocathode of the first reactor comprises a convection system, preferably a pump, and more preferably a peristatic or a centrifugal pump connected to a power supply.

13. A carbon dioxide capture device according to any of claims 1 to 12, wherein the structural elements of the device are made of metal, resin, composite resin and/or glass, and comprise a material selected from the group consisting of: Fe, Cr, Ti, Si, S, Ni, Cu, Co, N, Mn, P, Mo, Nb, Ta, Al, O, F, H and/or C, and preferably the structural element of the device are made in stainless steel and comprise a material selected from the group consisting of C, Cr, Mn, P, Si, S, Ni, Cu, Mo and/or N; in Inconel and comprise a material selected from the group consisting of Ni, Cr, Fe, Mo, Nb, Ta, Co, Mn, Cu, Al, Ti, and/or C; in plastic and comprise a material selected from the group consisting of H, O, N and F.

14. Use of a carbon dioxide capture device according to any of claims 1 to 13 for the treatment of carbonated water emitted by factories, vehicles or energy plants, preferably for removing carbon dioxide from said carbonated water.

15. Use of a carbon dioxide capture device according to any of claims 1 to 13 for the treatment of liquids comprising water, bicarbonate ions, carbonate ions and sodium chloride, preferably for removing carbon dioxide from said liquids.

16. Use of a carbon dioxide capture device according to claim 15 for the treatment of seawater, preferably for removing carbon dioxide from seawater.

17. A method for treating a liquid comprising water, bicarbonate ions, carbonate ions and sodium chloride comprising the step of introducing the liquid comprising water, bicarbonate ions, carbonate ions and sodium chloride, into the carbon dioxide capture device according to any of claims 1 to 13, preferably via the fluid inlet (114, 214, 314, 414) of the photocathode (111, 211, 311, 411) of the first reactor of the carbon dioxide capture device according to any of claims 1 to 13.

18. A method for treating a liquid comprising water, bicarbonate ions, carbonate ions and sodium chloride according to claim 17, wherein the step of introducing a liquid comprising water, bicarbonate ions, carbonate ions and sodium chloride into the carbon dioxide capture device according to any of claims 1 to 13 is carried out by natural convection, preferably by floating the carbon dioxide capture device according to any of claims 1 to 19 on the surface of the liquid comprising water, bicarbonate ions, carbonate ions and sodium chloride, or by a convection system, preferably with a pump, and more preferably with a peristatic or a centrifugal pump connected to a power supply.

19. A method for treating a liquid comprising water, bicarbonate ions, carbonate ions and sodium chloride according to claim 17 or claim 18, wherein the liquid comprising water, bicarbonate ions, carbonate ions and sodium chloride is seawater.
